# EUROPÄISCHE PATENTANMELDUNG

(11) **EP 1 065 386 A2**
(43) Veröffentlichungstag der Anmeldung: **03.01.2001**
(21) Anmeldenummer: 00113930.2
(22) Anmeldetag: 30.06.2000
(51) Int. Cl.: F15B 11/17, F15B 21/14, B62D 5/07

(54) **Hydraulikanlage für ein Flurförderzeug**

(30) Priorität: 02.07.1999 DE 19930562
(71) Anmelder: STILL GMBH, D-22113 Hamburg (DE)
(72) Erfinder: Tiedmann, Heinz, Dipl.-Ing., 84416 Taufkirchen (DE)
(74) Vertreter: Kasseckert, Rainer

(57) **Zusammenfassung**

Gegenstand der Erfindung ist eine Hydraulikanlage für ein Flurförderzeug mit einem Verbrennungsmotor (1), einer mit dem Verbrennungsmotor (1) angetriebenen Hydraulikpumpe (2) und einem mit der Hydraulikpumpe (2) verbundenen Schaltventil (13), über welches eine Druckseite der Hydraulikpumpe (2) mit einem Tank (5) verbindbar ist. Die Druckseite der Hydraulikpumpe (2) ist mit einer Förderleitung (8) verbunden, die zu mindestens einem hydraulischen Verbraucher führt. Erfindungsgemäß ist mindestens eine weitere Hydraulikpumpe (3) vorgesehen, wobei jeder Hydraulikpumpe (2, 3) ein Schaltventil (13, 14) zugeordnet ist über welches die Druckseite jeder Hydraulikpumpe (2, 3) mit einem Tank (5) verbindbar ist und wobei die Druckseiten der Hydraulikpumpen (2, 3) mit einer gemeinsamen Förderleitung (8) verbunden sind. Die Schaltstellung der Schaltventile (13, 14) ist in Abhängigkeit von dem Betriebszustand der Lenkvorrichtung (10), dem Betriebszustand der Hubvorrichtung und der Drehzahl des Verbrennungsmotors (1) beeinflußbar.

## Beschreibung

Die Erfindung betrifft eine Hydraulikanlage für ein Flurförderzeug mit einem Verbrennungsmotor, einer mit dem Verbrennungsmotor angetriebenen Hydraulikpumpe und einem der Hydraulikpumpe nachgeschalteten Schaltventil, über welches die Hydraulikpumpe ausgangsseitig wahlweise mit einem Tank oder mit einer Förderleitung verbindbar ist, wobei die Förderleitung zu mindestens einem hydraulischen Verbraucher führt.

Flurförderzeuge der genannten Art sind mit einem Verbrennungsmotor ausgerüstet, der Energie für den Fahrantrieb und für Nebenaggregate des Flurförderzeugs zur Verfügung stellt. Als Nebenaggregate sind häufig eine hydraulische Lenkvorrichtung, eine hydraulische Hubvorrichtung und gegebenenfalls hydraulisch angetriebene Zusatzfunktionen der Hubvorrichtung vorgesehen. Die genannten hydraulischen Verbraucher sind über eine Förderleitung mit der Hydraulikpumpe verbunden. Die Hydraulikpumpe ist starr mit einer Kurbelwelle des Verbrennungsmotors verbunden und wird daher während des Betriebs des Flurförderzeugs ständig angetrieben.

Um mögliche Energieverluste durch die unabhängig von dem Betriebszustand der Nebenaggregate ständig angetriebenen Hydraulikpumpe zu minimieren, ist es bekannt, zwischen der Hydraulikpumpe und der Förderleitung ein Schaltventil anzuordnen. Dieses Schaltventil ist elektrisch ansteuerbar und verbindet die Hydraulikpumpe mit dem drucklosen Tank, wenn von keinem der Nebenaggregate Hydrauliköl angefordert wird. Sobald jedoch einer der hydraulischen Verbraucher Hydrauliköl benötigt, wird mittels des Schaltventils die gesamte Fördermenge der Hydraulikpumpe in der Förderleitung zur Verfügung gestellt.

Der vorliegenden Erfindung liegt die Aufgabe zugrunde, eine hinsichtlich der Energieausnutzung weiter verbesserte Hydraulikanlage für ein Flurförderzeug zur Verfügung zu stellen.

Diese Aufgabe wird erfindungsgemäß dadurch gelöst, daß mindestens eine weitere Hydraulikpumpe vorgesehen ist, wobei jeder Hydraulikpumpe ein Schaltventil zugeordnet ist, über welches jede Hydraulikpumpe ausgangsseitig wahlweise mit dem Tank oder mit der gemeinsamen Förderleitung verbindbar ist. Es sind also mindestens zwei Hydraulikpumpen vorgesehen, die gemeinsam den maximalen Bedarf an Hydraulikfluid abdecken können. Die Hydraulikpumpen sind starr mit der Kurbelwelle des Verbrennungsmotors verbunden, werden also bei laufendem Verbrennungsmotor ständig angetrieben. Auf aufwendige schaltbare Kupplungselemente wird also verzichtet. In Abhängigkeit von dem aktuellen Bedarf kann das mit jeder Hydraulikpumpe geförderte Hydrauliköl mittels der Schaltventile jeweils wahlweise dem Tank oder der Förderleitung zugeführt werden. Die in der Förderleitung zur Verfügung stehende Hydraulikölstrom kann daher stufenweise dem tatsächlichen Bedarf angepaßt werden. Die Energieausnutzung wird gegenüber dem Stand der Technik dadurch verbessert, daß bei geringem Bedarf an Hydrauliköl nur ein Teil der maximalen Fördermenge in der Förderleitung zur Verfügung gestellt wird.

Zweckmäßig ist es, wenn als hydraulischer Verbraucher eine hydraulische Lenkvorrichtung vorgesehen ist und die Schaltstellung der Schaltventile in Abhängigkeit von dem Betriebszustand der Lenkvorrichtung beeinflußbar ist. Der Betriebszustand der Lenkvorrichtung kann beispielsweise mittels eines Drucksensors an einem Lenkventil, oder mittels eines elektrischen Sensors an einem Lenkrad erfaßt werden. Die Schaltventile werden dann in Abhängigkeit von dem Ölbedarf der Lenkvorrichtung geschaltet.

Ebenso vorteilhaft ist es, wenn als hydraulischer Verbraucher eine hydraulische Hubvorrichtung vorgesehen ist und die Schaltstellung der Schaltventile in Abhängigkeit von dem Betriebszustand der Hubvorrichtung beeinflußbar ist. Die Größe des Hydraulikölstroms, welcher der Hubvorrichtung zugeführt werden muß, kann beispielsweise in Abhängigkeit von der Stellung eines Bedienelements für die Hubvorrichtung ermittelt werden.

Weitere Vorteile ergeben sich, wenn die Schaltstellung der Schaltventile in Abhängigkeit von der Drehzahl des Verbrennungsmotors beeinflußbar ist. Hierbei kann berücksichtigt werden, daß die Fördermenge der Hydraulikpumpen sich im wesentlichen proportional zur Drehzahl des Verbrennungsmotors verändert.

Eine besonders einfache Anordnung ergibt sich, wenn die Hydraulikpumpen in einem gemeinsamen Gehäuse angeordnet sind. Die Anzahl der zu montierenden Bauteile und wird hierdurch minimiert.

Eine weitere Vereinfachung der Hydraulikanlage ergibt sich dadurch, daß die Hydraulikpumpen und die Schaltventile in einem gemeinsamen Gehäuse angeordnet sind. Es kann hierbei auf hydraulische Verbindungsleitungen verzichtet werden.

Vorzugsweise sind die Schaltventile elektrisch ansteuerbar. Zur Ansteuerung der Schaltventile kann eine elektrische Steuereinheit vorgesehen werden, in der aus den obengenannten Meßgrößen über den momentanen Bedarf an Hydrauliköl und aus der momentanen Drehzahl des Verbrennungsmotors die zweckmäßige Schaltstellung der Schaltventile ermittelt wird.

Die Steuereinheit ist hierfür mit einem den Betriebszustand der Lenkvorrichtung und/oder mit einem den Betriebszustand der Hubvorrichtung und/oder mit einem die Drehzahl des Verbrennungsmotors wiedergebenden Signalgeber verbunden.

Weitere Vorteile und Einzelheiten der Erfindung werden anhand des in der schematischen Figur dargestellten Ausführungsbeispiels näher erläutert.

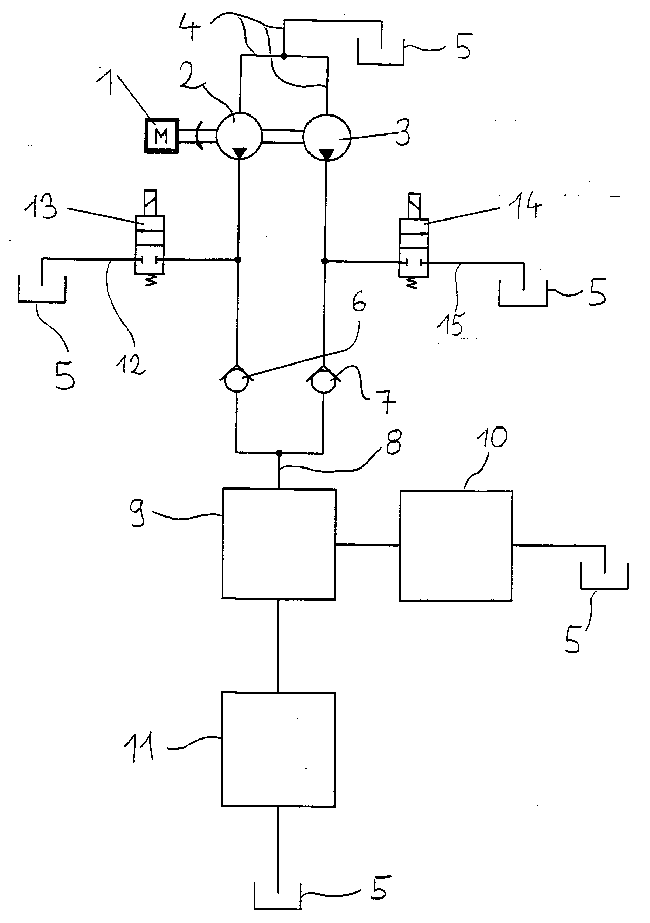

Die Figur zeigt ein hydraulisches Schaltbild einer erfindungsgemäßen Hydraulikanlage. Ein Verbrennungsmotor 1 liefert die Energie für einen nicht dargestellten Fahrantrieb des Flurförderzeugs und für den Antrieb von zwei Hydraulikpumpen 2, 3, welche starr an eine Kurbelwelle des Verbrennungsmotors gekoppelt sind. Die Hydraulikpumpen 2, 3 versorgen verschiedene hydraulische Aggregate des Flurförderzeugs, beispielsweise eine Lenkungsvorrichtung, einen hydraulischen Hubzylinder zum Anheben einer Last und ein hydraulischer Neigezylinder zum Neigen eines Hubgerüsts mit Hydrauliköl.

Über Saugleitungen 4 saugen die Hydraulikpumpen 2, 3 Hydrauliköl aus einem drucklosen Tank 5 an. Infolge der starren Koppelung an den Verbrennungsmotor 1 fördern beide Hydraulikpumpen 2, 3 während des Betriebs des Flurförderzeugs ständig Hydrauliköl. Die Druckseite jeder Hydraulikpumpe 2, 3 ist mit jeweils einem Rückschlagventil 6, 7 verbunden. Die Rückschlagventile 6, 7 münden stromaufwärts in eine gemeinsame Förderleitung 8.

Die Förderleitung 8 führt zu einem Prioritätsventil 9, welches eine hydraulische Lenkungsvorrichtung 10 bevorzugt mit Hydrauliköl versorgt. Der von der Lenkungsvorrichtung 10 nicht benötigte Teil des Hydraulikölstroms in der Förderleitung 8 wird über das Prioritätsventil 9 einer Arbeitshydraulikeinheit 11 des Flurförderzeugs zugeführt. Die Arbeitshydraulikeinheit 11 umfaßt verschiedene hydraulische Verbraucher, z.B. einen Hubzylinder, einen Neigezylinder und gegebenenfalls hydraulische Stellglieder für eine oder mehrere Zusatzfunktionen. Ebenfalls Bestandteil der Arbeitshydraulikeinheit 11 sind hydraulische Wegeventile, mit denen der Zufluß von Hydrauliköl zu den verschiedenen hydraulischen Verbrauchern gesteuert wird. Die hydraulischen Wegeventile werden direkt oder indirekt von einer Bedienperson gesteuert.

Erfindungsgemäß zweigt zwischen der Hydraulikpumpe 2 und dem Rückschlagventil 6 eine zum Tank 5 führende Leitung 12 ab, in der ein elektrisch schaltbares Schaltventil 13 angeordnet ist. In analoger Anordnung zweigt zwischen der zweiten Pumpe 3 und dem Rückschlagventil 7 eine Leitung 15 ab, die ebenfalls über ein Schaltventil 14 zum Tank 5 führt. Mit den Schaltventilen 13, 14 können die Hydraulikpumpen 2, 3 unabhängig voneinander mit dem drucklosen Tank 5 verbunden werden. Eine einem geöffnetem Schaltventil 13, 14 zugeordnete Hydraulikpumpe 2, 3 fördert Hydrauliköl drucklos in den Tank 5. Die Hydraulikpumpe 2, 3 nimmt hierbei von der Kurbelwelle des Verbrennungsmotors 1 ein nur geringes Drehmoment auf. Die Leistungsaufnahme der Hydraulikpumpen 2, 3 sind dadurch in einem Betriebszustand, in dem von den hydraulischen Verbrauchern kein oder wenig Hydrauliköl benötigt wird, minimiert.

Gemäß eines Ausführungsbeispiels werden die Schaltventile 13, 14 nach folgender Schaltlogik betätigt, wobei gemäß einer vereinfachenden Annahme als hydraulische Verbraucher eine hydraulische Lenkungsvorrichtung 10 und ein in der Arbeitshydraulikeinheit 11 enthaltener hydraulischer Hubzylinder berücksichtigt werden:
- Wenn keiner der hydraulischen Verbraucher Hydrauliköl benötigt, sind beide Schaltventile 13, 14 geöffnet.
- Bei betätigter Lenkungsvorrichtung ist das Schaltventil 13 geöffnet und das Schaltventil 14 geschlossen (oder umgekehrt), wenn die Drehzahl des Verbrennungsmotors 1 über einem vorgegebenen Drehzahlwert liegt.
- Bei betätigter Lenkungsvorrichtung sind beide Schaltventile 13, 14 geschlossen, wenn die Drehzahl des Verbrennungsmotors 1 unter dem vorgegebenen Drehzahlwert liegt.
- Während eines Anhebens mit dem Hubzylinder mit einer unter einem vorgegebenen Hubgeschwindigkeitswert liegenden Hubgeschwindigkeit ist das Schaltventil 13 geöffnet und das Schaltventil 14 geschlossen (oder umgekehrt).
- Während eines Anhebens mit dem Hubzylinder mit einer über einem vorgegebenen Hubgeschwindigkeitswert liegenden Hubgeschwindigkeit sind beide Schaltventile 13, 14 geschlossen.

Die Betriebszustände der Lenkungsvorrichtung, des Hubzylinders und der weiteren hydraulischen Verbraucher werden vorzugsweise mit elektrischen Signalgebern erfaßt. Diese Signalgeber können an den jeweiligen Bedienelementen oder direkt an den hydraulischen Verbrauchern angeordnet sein. Die Drehzahl des Verbrennungsmotors wird vorzugsweise mit einem elektrischen Drehzahlsensor erfaßt. In einer elektrischen Steuereinheit werden diese Signale verarbeitet und die Schaltventile entsprechend angesteuert.

Eine feinere Abstufung der Fördermengen der Hydraulikpumpen kann erreicht werden, wenn die beiden Pumpen eine unterschiedliche Förderkapazität aufweisen. Ausgehend von einem Betriebszustand, bei dem beide Schaltventile geöffnet sind, kann zunächst das der kleineren Hydraulikpumpe zugeordnete Schaltventil geschlossen werden. Der Hydraulikölstrom in der Förderleitung erhöht sich, wenn das der kleineren Pumpe zugeordnete Schaltventil geöffnet und gleichzeitig das der größeren Pumpe zugeordnete Schaltventil geschlossen wird. Eine weitere Erhöhung der Fördermenge wird erreicht, wenn beide Schaltventile geschlossen werden.

## Patentansprüche

1. Hydraulikanlage für ein Flurförderzeug mit einem Verbrennungsmotor (1), einer mit dem Verbrennungsmotor (1) angetriebenen Hydraulikpumpe (2) und einem mit der Hydraulikpumpe (2) verbundenen Schaltventil (13), über welches eine Druckseite der Hydraulikpumpe (2) mit einem Tank (5) verbindbar ist und wobei die Druckseite der Hydraulikpumpe (2) mit einer Förderleitung (8) verbunden ist, die zu mindestens einem hydraulischen Verbraucher führt, **dadurch gekennzeichnet,** daß mindestens eine weitere Hydraulikpumpe (3) vorgesehen ist, wobei jeder Hydraulikpumpe (2, 3) ein Schaltventil (13, 14) zugeordnet ist über welche die Druckseite jeder Hydraulikpumpe (2, 3) mit einem Tank (5) verbindbar ist und wobei die Druckseiten der Hydraulikpumpen (2, 3) mit einer gemeinsamen Förderleitung (8) verbunden sind.

2. Hydraulikanlage nach Anspruch 1, dadurch gekennzeichnet, daß als hydraulischer Verbraucher eine hydraulische Lenkvorrichtung (10) vorgesehen ist und die Schaltstellung der Schaltventile (13, 14) in Abhängigkeit von dem Betriebszustand der Lenkvorrichtung (10) beeinflußbar ist.

3. Hydraulikanlage nach Anspruch 1 oder 2, dadurch gekennzeichnet, daß als hydraulischer Verbraucher eine hydraulische Hubvorrichtung vorgesehen ist und die Schaltstellung der Schaltventile (13, 14) in Abhängigkeit von dem Betriebszustand der Hubvorrichtung beeinflußbar ist.

4. Hydraulikanlage nach einem der Ansprüche 1 bis 3, dadurch gekennzeichnet, daß die Schaltstellung der Schaltventile (13, 14) in Abhängigkeit von der Drehzahl des Verbrennungsmotors (1) beeinflußbar ist.

5. Hydraulikanlage nach einem der Ansprüche 1 bis 4, dadurch gekennzeichnet, daß die Hydraulikpumpen (2, 3) in einem gemeinsamen Gehäuse angeordnet sind.

6. Hydraulikanlage nach einem der Ansprüche 1 bis 5, dadurch gekennzeichnet, daß die Hydraulikpumpen (2, 3) und die Schaltventile (13, 14) in einem gemeinsamen Gehäuse angeordnet sind.

7. Hydraulikanlage nach einem der Ansprüche 1 bis 6, dadurch gekennzeichnet, daß die Schaltventile (13, 14) elektrisch ansteuerbar sind.

8. Hydraulikanlage nach Anspruch 7, dadurch gekennzeichnet, daß zur Ansteuerung der Schaltventile (13, 14) eine elektrische Steuereinheit vorgesehen ist.

9. Hydraulikanlage nach Anspruch 8, dadurch gekennzeichnet, daß die Steuereinheit mit einem den Betriebszustand der Lenkvorrichtung (10) und/oder mit einem den Betriebszustand der Hubvorrichtung und/oder mit einem die Drehzahl des Verbrennungsmotors (1) wiedergebenden Signalgeber verbunden ist.
